# EUROPÄISCHE PATENTSCHRIFT

(11) **EP 2 465 067 B1**
(45) Veröffentlichungstag und Bekanntmachung des Hinweises auf die Patenterteilung: **21.12.2016**
(21) Anmeldenummer: 10720337.4
(22) Anmeldetag: 17.04.2010
(51) Int. Cl.: G06F 21/51, G06F 21/77, H04W 12/10, H04W 4/00

(54) **VERFAHREN UND VORRICHTUNG ZUM AUSFÜHREN VON ANWENDUNGEN IN EINER SICHEREN, AUTONOMEN UMGEBUNG**
METHOD AND APPARATUS FOR EXECUTING APPLICATIONS IN A SECURE AND AUTONOMOUS ENVIRONMENT
PROCÉDÉ ET APPAREIL POUR L'EXÉCUTION D'APPLICATIONS DANS UN ENVIRONNEMENT AUTONOME ET SÉCURISÉ

(30) Priorität: 12.08.2009 DE 102009037223
(43) Veröffentlichungstag der Anmeldung: 20.06.2012
(73) Patentinhaber: Deutsche Telekom AG, 53113 Bonn (DE)
(72) Erfinder: MOOS, Rainer, 57080 Siegen (DE); SCHMIDT, Klaus Dieter, 35716 Dietzhölztal (DE); BREUER, Jörg, 57223 Kreuztal (DE)
(74) Vertreter: Blumbach Zinngrebe
(86) Internationale Anmeldenummer: PCT/DE2010/000435
(87) Internationale Veröffentlichungsnummer: WO 2011/018060

(56) Entgegenhaltungen:
- WO-A1-00/25278
- WO-A1-97/05551
- WO-A2-2006/021178

## Beschreibung

Die Erfindung bezieht sich ganz allgemein auf das technische Gebiet der sicheren Kapselung steuerbarer Prozesse, Anwendungen und Daten und insbesondere auf ein Verfahren zum Ausführen von Anwendungen in einer sicheren, Vorrichtung, welche mit einer externen Kommunikationseinrichtung, vorzugsweise einem Rechnersystem, verbindbar ist. Weiterhin betrifft die Erfindung eine derartige sichere Vorrichtung zum Ausführen von Anwendungen.

In der heutigen Informationsgesellschaft kommt der Kommunikations- und Datensicherheit ein sehr hoher Stellenwert zu. Sie dient vornehmlich der Gewährleistung eines sicheren, vertraulichen und authentischen Datenaustauschs und der sicheren Datenhaltung und deren Archivierung. Um Daten sicher übertragen zu können, werden Informationen vor der Übertragung an der Quelle so abgesichert, dass eine nachträgliche Verfälschung erkannt werden kann. Um die Vertraulichkeit zu gewährleisten, muss verhindert werden, dass Informationen auf dem Weg vom Sender zum Empfänger oder nach einer Ablage durch unautorisierte Personen mitgelesen werden können. Authentizität wird dadurch erreicht, dass eine Information oder Aktion einer bestimmten Person oder einem bestimmten System eindeutig zugeordnet werden kann.

Technische Realisierungen für die Identifikation, Authentifizierung, Signatur und Verschlüsselung auf der Basis von kryptografischen Lösungen sind weltweit etabliert und nutzbar. Kryptografische Lösungen dienen dazu, Schlüsselmaterial geheim zu halten. Diese Aufgabe können Chipkarten, wie zum Beispiel Smart Cards, lösen. Geheim zu haltende Schlüssel werden entweder in sogenannten Trustcenter-Umgebungen erzeugt und in Chipkarten geschrieben oder innerhalb der Chipkarte selbst erzeugt und darin geheim gehalten. Moderne Smart Cards sind in der Lage, die notwendigen kryptografischen Prozesse in einem integrierten Chip selbst zu verarbeiten. Die geheimen Schlüssel müssen dann die Smart Card nicht mehr verlassen. Obwohl Chipkarten in der Lage sind, Schlüssel geheim zu halten und diese für Rechenprozesse zu nutzen, kann die Smart Card nicht verhindern, dass Daten, die kryptografisch behandelt werden sollen vorher in einer umgebenden Anwendung abgegriffen werden können.

Dokument WO 97/05551 A1 beschreibt ein Verfahren und eine Vorrichtung zum Betrieben von Ressourcen, wobei die Steuerung mittels eines Sicherheitsmoduls erfolgt. Im Sicherheitsmodul werden vorgegebene Steuerfunktionen zum Steuern der sicheren Ressourcen bereitgestellt. Das Sicherheitsmodul führt eine Authentizitätsprüfung der Steuerbefehle mittels in Sicherheitsmodul enthaltener Authentifizierungsmittel. Nur wenn die Prüfung erfolgreich ist, wird die dem im jeweiligen Steuerbefehl enthaltenen Befehlscode zugeordnete Steuerfunktion vom Sicherheitsmodul ausgeführt.

Der vorliegenden Erfindung liegt die Aufgabe zugrunde, ein Verfahren und eine sichere Vorrichtung bereitzustellen, mit denen die Kommunikations- und Datensicherheit erhöht werden kann, wenn komplexe Anwendungen wegen einer eingeschränkten Funktionalität und Kapazität einer Chipkarte außerhalb der Chipkarte ablaufen müssen.

Ein Kerngedanke der Erfindung ist darin zu sehen, unter Verwendung herkömmlicher Chipkarten, auch Smart Card genannt, die beispielsweise der Normreihe ISO7816 angehören, eine autonome und sichere Umgebung zu schaffen, in der komplexe Anwendungen ablaufen können. Innerhalb dieser sicheren, autonomen Umgebung kann die Vertraulichkeit und Unversehrtheit der Datenverarbeitung, Datenspeicherung und Datenübertragung in einer ansonsten offenen, im Wesentlichen ungesicherten Umgebung sichergestellt werden. Diese Maßnahme kann auch als sichere Kapselung steuerbarer Anwendungen und Daten angesehen werden.

Das oben genannte technische Problem wird zum einen durch ein Verfahren zum Ausführen von Anwendungen in einer sicheren Vorrichtung gelöst. Bei der sicheren Vorrichtung kann es sich um eine modulare, tragbare Vorrichtung handeln, welche mit einer externen Kommunikationseinrichtung, beispielsweise einem Rechnersystem verbunden werden kann. Die externe Kommunikationseinrichtung kann auch ein Personal Computer, PDA, MDA, Mobiltelefon oder eine ähnliche Kommunikationseinrichtung sein.

Um eine sichere Kapselung steuerbarer Anwendungen zu gewährleisen, wird ein versiegelter Befehl zum Aufrufen einer in der Vorrichtung abgelegten Anwendung durch eine in der Vorrichtung angeordneten Chipkarte authentifiziert. In der Vorrichtung, aber außerhalb der Chipkarte, wird geprüft, ob die Anwendung von der Vorrichtung überhaupt ausgeführt werden darf. Wenn die Anwendung von der Vorrichtung ausgeführt werden darf, wird die Anwendung nach erfolgreicher Authentifizierung durch die Vorrichtung ausgeführt.

Durch die doppelte Sicherung der Ausführung einer Anwendung wird eine Kapselung, das heißt eine Ausführung von isolierten Anwendungen ermöglicht. Denn die aufgerufene Anwendung wird nur dann von der Vorrichtung ausgeführt, wenn die Anwendung eindeutig für die Vorrichtung bestimmt ist und von einer berechtigten Stelle aufgerufen wurde. Die Vorrichtung bietet somit eine sichere und autonome Umgebung für den Ablauf von Anwendungen und die Speicherung und/oder Archivierung von Informationen.

Angemerkt sei an dieser Stelle, dass die Verfahrensschritte des Anspruchs 1 und der übrigen Verfahrensansprüche nicht zwingend in der Reihenfolge, in der sie angegeben worden sind, ausgeführt werden müssen. Insbesondere die Authentifizierungs- und Prüfschritte sind hinsichtlich ihrer zeitlichen Abfolge austauschbar.

Um die Sicherheit in der Vorrichtung, welche die Kapselung, das heißt Ausführung von isolierten Anwendungen ermöglicht, zu erhöhen, wird in der Vorrichtung ein gegen Auslesen gesichertes Geheimnis abgelegt. Das Geheimnis kann ein Urgeheimnis sein, welches beispielsweise bei der Herstellung der Vorrichtung eingebracht wird. Der Prüfschritt nach Anspruch umfasst in diesem Fall den Schritt des Prüfens der Anwendung gegen das Geheimnis, um zu ermitteln, ob die Anwendung von der Vorrichtung ausgeführt werden darf. Um die Anwendung gegen das Urgeheimnis prüfen zu können, kann die Anwendung beispielsweise mit einem öffentlichen Schlüssel verschlüsselt worden sein, der mit dem Geheimnis entschlüsselt werden kann. Derartige asymmetrische Verschlüsselungsverfahren sind hinlänglich bekannt.

Um die Kommunikations- und Datensicherheit weiter zu steigern, wird ferner die Anwendung versiegelt, wobei vor der Ausführung der Anwendung die Authentizität der Anwendung in der Chipkarte geprüft wird.

Durch die doppelte Sicherung der Anwendung wird sichergestellt, dass die Vorrichtung nur dann die Anwendung ausführt, wenn die Anwendung eindeutig für die Vorrichtung bestimmt ist und von einer berechtigten Stelle abgesendet wurde.

Angemerkt sei an dieser Stelle, dass mit den Formulierungen "versiegelter Befehl" und "versiegelte Anwendung" zum Ausdruck gebracht wird, dass die Anwendung und der Befehl mittels eines Versiegelungverfahrens zum Beispiel digital signiert werden.

Da das Verfahren in einer ansonsten ungesicherten Umgebung ausgeführt werden kann, kann die Sicherheit innerhalb der sicheren Vorrichtung dadurch weiter verbessert werden, dass die Vorrichtung steuerbare Schnittstellen aufweist und dass die Anwendung, zweckmäßigerweise während des Ablaufs, nur über eine vorbestimmte Schnittstelle, der steuerbaren Schnittstellen mit einer extern verbundenen Kommunikationseinrichtung kommunizieren kann. Kommunizieren umfasst das Austauschen von Daten, Ergebnissen und Steuerbefehlen.

Zweckmäßigerweise wird die vorbestimmte Schnittstelle in Abhängigkeit von der aufgerufenen Anwendung aus den steuerbaren Schnittstellen ausgewählt. Beispielsweise ist in der Anwendung eine Portadresse enthalten. Dadurch wird sichergestellt, dass die Anwendung nur mit einer vorbestimmten Kommunikationseinrichtung kommunizieren kann.

Die Kommünikations- und Datensicherheit kann weiterhin dadurch verbessert werden, dass Anwendungen, Daten und/oder Steuerbefehle nur an vorbestimmten Schnittstellen der Vorrichtung empfangen werden können. Anwendungen, die von der Vorrichtung ausgeführt werden sollen, können demzufolge nur an einer vorher ausgewählten, vorbestimmten Schnittstelle empfangen werden. Kommunikationseinrichtungen, die an anderen Schnittstellen angeschlossen sind, können keine Anwendungen, Daten und/oder Steuerbefehle zur Vorrichtung übertragen. Das heißt, dass auch Befehle zum Aufrufen von Anwendungen nur über vorbestimmte Schnittstellen die Vorrichtung erreichen können.

In umgekehrter Kommunikationsrichtung können wiederum Daten, die in der Kommunikationsvorrichtung abgelegt sind, vorteilhafter Weise nur über eine vorbestimmte Schnittstelle der Vorrichtung ausgegeben und somit nur zu einer vorbestimmten externen Kommunikationseinrichtung übertragen werden.

Das Verfahren ermöglicht nicht nur eine Ausführung von Anwendungen in einer sicheren und autonomen Umgebung. Zudem können in der Vorrichtung auch Daten gespeichert werden.

Um eine hohe Datensicherheit zu gewährleisten, werden die in der Vorrichtung versiegelten Daten gespeichert. Vor dem Speichern der Daten werden die versiegelten Daten von der Chipkarte authentifiziert. Erst nach erfolgreicher Authentifizierung der versiegelten Daten werden diese in der Vorrichtung gespeichert.

Um unversiegelte Daten, beispielsweise Daten, die von einer in der Vorrichtung ablaufenden Anwendung erzeugt werden, in der Vorrichtung sicher abspeichern zu können, werden diese Daten in der Vorrichtung selbst versiegelt. Hierzu wird eine in der Vorrichtung abgelegte Anwendung zum Versiegeln von Daten geprüft, ob diese Anwendung von der Vorrichtung ausgeführt werden darf. Nach erfolgreicher Prüfung wird die Anwendung ausgeführt, um das Versiegeln der zu speichernden Daten zu steuern.

Um Daten, versiegelte oder unversiegelte, durch einen sicheren kontrollierbaren Prozess in der Vorrichtung zu speichern, der von einer externen Kommünikationseinrichtung ausgelöst werden kann, empfängt die Vorrichtung einen versiegelten Befehl zum Aufrufen einer Anwendung zum Speichern von Daten in der Vorrichtung. In der Vorrichtung wird die entsprechende Anwendung geprüft, ob sie von der Vorrichtung ausgeführt werden darf. Weiterhin wird der versiegelte Aufruf-Befehl durch die Chipkarte authentifiziert. Erst wenn die Anwendung von der Vorrichtung ausgeführt werden darf, wird das Ausführen der Anwendung nach erfolgreicher Authentifizierung gestartet. Die Anwendung steuert dann das Ablegen der Daten in einer Speichereinrichtung der Vorrichtung.

Um eine hohe Daten- und Kommunikationssicherheit beim Auslesen von Daten aus der Vorrichtung gewährleisten zu können, werden versiegelte Befehle zum Aufrufen einer Anwendung zum Lesen der in der Vorrichtung gespeicherten Daten benötigt. Das Auslesen kann von einer externen Kommunikationseinrichtung ausgelöst werden, indem sie einen versiegelten Aufrufbefehl zur sicheren Vorrichtung überträgt. In der Vorrichtung wird dann geprüft, ob diese Anwendung zum Lesen von Daten von der Vorrichtung ausgeführt werden darf. Weiterhin wird der versiegelte Aufruf-Befehl durch die Chipkarte authentifiziert. Erst nach erfolgreicher Authentifizierung und nach der Feststellung, dass die Anwendung von der Vorrichtung ausgeführt werden darf, wird die Ausführung der Anwendung gestartet, wobei die Daten während des Ablaufs der Anwendung gelesen und über eine vorbestimmte Schnittstelle ausgegeben werden können.

Die Daten- und Kommunikationssicherheit kann weiterhin dadurch gesteigert werden, dass in gezielter Weise nur ein vorbestimmter Speicherbereich zum Speichern von Daten in der Vorrichtung bereitgestellt wird. Hierzu wird zunächst ein versiegelter Befehl zum Aufrufen einer Anwendung, welche einen vorbestimmbaren Speicherbereich einer Speichereinrichtung zum Schreiben und/oder Auslesen von Daten bereitstellt. Dieser Aufruf-Befehl wird vorzugsweise von einer externen Steuereinrichtung zur sicheren Vorrichtung übertragen. Wiederum wird in der Vorrichtung geprüft, on diese Anwendung von der Vorrichtung ausgeführt werden darf. Weiterhin wird der empfangene versiegelte Aufruf-Befehl durch die Chipkarte authentifiziert. Wenn die Anwendung von der Vorrichtung ausgeführt werden darf, wird die Ausführung der Anwendung nach erfolgreicher Authentifizierung gestartet. Während des Ablaufs der Anwendung wird der vorbestimmbare Speicherbereich, vorzugsweise ein Adressenraum, definiert. Nur in diesen Speicherbereich können dann Daten abgelegt und ausgelesen werden.

Denkbar ist, dass ein bestimmter Speicherbereich in Abhängigkeit von einer auszuführenden Anwendung und/oder in Abhängigkeit von einer ausgewählten Schnittstelle definiert wird.

An dieser Stelle sei angemerkt, dass die Befehle zum Aufrufen von Anwendungen, welche in der Vorrichtung ausgeführt werden sollen, entweder intern, beispielsweise von einer laufenden Anwendung erzeugt oder von einer externen Kommunikationseinrichtung zur Vorrichtung übertragen werden.

Damit eine extern angeschaltete Kommunikationsvorrichtung-die Funktionalität der in der Vorrichtung angeordneten Chipkarte mitbenutzen darf, kann ein transparenter Zugriff auf die Chipkarte freigegeben werden. Hierzu wird von einer externen Kommunikationseinrichtung ein versiegelter Befehl zum Aufrufen einer Anwendung zur Steuerung eines transparenten Zugriffs auf die Chipkarte zur Vorrichtung übertragen. In der Vorrichtung wird wiederum geprüft, ob diese Anwendung von der Vorrichtung ausgeführt werden darf. Weiterhin wird der versiegelte Aufruf-Befehl durch die Chipkarte authentifiziert. Wenn die Anwendung von der Vorrichtung ausgeführt werden darf und die Authentifizierung erfolgreich war, wird die Anwendung durch die Vorrichtung ausgeführt. Nach erfolgreicher Ausführung der Anwendung wird vorzugsweise eine Schnittstelle der Vorrichtung definiert, über die die externe oder eine andere externe Kommunikationseinrichtung einen transparenten Zugriff auf die Chipkarte erhält.

Das oben genannte technische Problem wird zum Anderen durch eine sichere Vorrichtung zum Ausführen von Anwendungen gelöst, welche zur Durchführung des Verfahrens ausgebildet ist.

Die Vorrichtung weist wenigstens eine ansteuerbare Schnittstelle zum Verbinden mit einer externen Kommunikationseinrichtung auf. Ferner ist eine erste Speichereinrichtung zum Speichern wenigstens einer Anwendung vorgesehen. Eine programmierbare Steuereinrichtung dient unter anderem dazu, die Ausführung einer Anwendung zu steuern. Zudem ist eine Chipkarte vorgesehen, die versiegelte Befehle zum Aufrufen von Anwendungen authentifizieren kann. Die Vorrichtung weist eine außerhalb der Chipkarte implementierte Prüfeinrichtung auf, die prüft, ob eine Anwendung von der Vorrichtung ausgeführt werden darf. Die programmierbare Steuereinrichtung ist derart ausgebildet, dass sie eine aufgerufene Anwendung nur ausführt, wenn der Aufruf-Befehl durch die Chipkarte erfolgreich authentifiziert worden ist und die Prüfeinrichtung ermittelt hat, dass die Anwendung von der Vorrichtung ausgeführt werden darf.

Eine vorteilhafte Weiterbildung sieht eine gegen Auslesen gesicherte Speichereinrichtung vor, in der ein Geheimnis abgelegt ist. Die Prüfeinrichtung ist in diesem Fall zum Prüfen der Anwendung gegen das Geheimnis ausgebildet, um zu ermitteln, ob die Anwendung von der Vorrichtung ausgeführt werden darf.

Um die sichere Funktionalität der Vorrichtung und die Daten- und Kommunikationssicherheit zu erhöhen, ist die Chipkarte zum Authentifizieren von versiegelten Anwendungen und/oder Daten ausgebildet. Zudem ist die programmierbare Steuereinrichtung derart ausgebildet, dass sie eine aufgerufene Anwendung nur ausführt, wenn der Aufruf-Befehl und die Anwendung durch die Chipkarte erfolgreich authentifiziert worden sind.

Bei der sicheren Vorrichtung handelt es sich vorzugsweise um ein tragbares Modul, welches zum Beispiel eine microSD Karte enthalten kann.

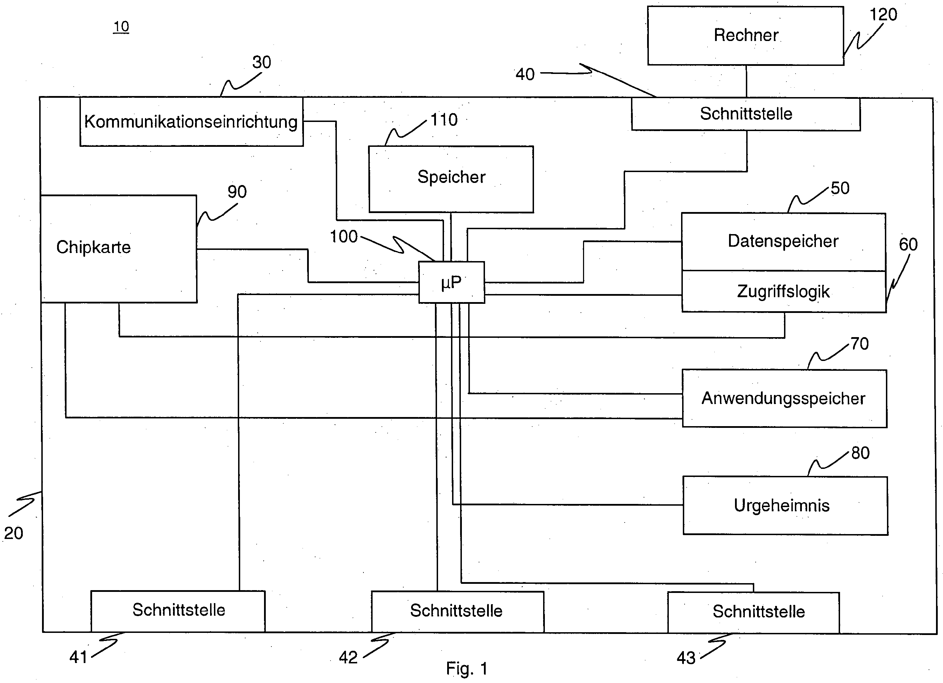

Die Erfindung wird nachfolgend anhand einiger Ausführungsbeispiele in Verbindung mit der beiliegenden Figur näher erläutert.

Die Figur zeigt ein beispielhaftes Kommunikationssystem 10, bei dem ein tragbares Sicherheitsmodul 20 als sichere Vorrichtung über eine Schnittstelle 40 mit einer externen Kommunikationseinrichtung 120 verbunden sein kann. Die Kommunikationseinrichtung 120 ist beispielsweise ein Rechner oder Rechnersystem. Bei der Schnittstelle 40 kann es sich um eine drahtgebundene Schnittstelle, beispielsweise eine USB-Schnittstelle handeln, an die der Rechner 120 mittels eines USB- Verbiridungskabels angeschlossen sein kann. Die Schnittstelle 40 kann allerdings auch als drahtlose Schnittstelle ausgebildet sein, wobei dann zwischen Rechner 120 und dem Sicherheitsmodul 20 eine Funkverbindung bestehen kann. Denkbar ist auch, dass der Rechner 120 einen Aufnahmebereich aufweist, in welchen das Sicherheitsmodul 20 eingeführt werden kann. Die Schnittstelle 40 kann in diesem Fall mit einem korrespondierenden Kontaktabschnitt des Rechners 120 verbunden werden.

Weiterhin weist das Sicherheitsmodul 20 einen programmierbaren Mikroprozessor 100 auf, der mit einem Speicher 110 verbunden ist, in welchem Anwendungen abgelegt werden können. Wie nachfolgend noch näher erläutert wird, kann eine solche Anwendung unter Steuerung des Mikroprozessors 100 in dem Sicherheitsmodul 20 ablaufen, und zwar in gekapselter Weise. Bei den im Speicher 110 ablegbaren Anwendungen handelt es sich um sogenannte isolierte, d. h. gekapselte Anwendungen, die nur nach strengen Sicherheitsprüfungen im Sicherheitsmodul 20 ausgeführt werden können.

Darüber hinaus kann das Sicherheitsmodul 20 einen Datenspeicher 50 aufweisen, in welchem zum Beispiel vom Rechner 120 kommende Daten, oder Daten, die von einer ablaufenden Anwendung erzeugt werden, gespeichert werden können. Der Datenspeicher 50 kann über eine Zugriffslogik 60 angesprochen werden, die nur unter bestimmten Voraussetzungen den Zugriff auf den Datenspeicher 50 zum Schreiben und/oder Lesen von Daten freigibt. Die Zugriffslögik 60 kann auch Bestandteil des Mikroprozessors 100 sein.

In dem Sicherheitsmodul 20 ist ein weiterer Speicher 70 vorgesehen, in welchem Anwendungen, auch Applikationen genannt, gespeichert werden können, die in den Speicher 110 geladen werden können, um vom Mikroprozessor 100 ausgeführt werden zu können. Die vom Sicherheitsmodul 20 auszuführenden Anwendungen können beispielsweise über den Rechner 120 in das Sicherheitsmodul 20 geladen werden. Weiterhin verfügt das Sicherheitsmodul 20 über einen gegen Auslesen gesicherten Speicher 80, in den vorzugsweise bei Herstellung des Sicherheitsmoduls ein Urgeheimnis eingebracht wird.

Ferner ist in dem Sicherheitsmodul 20 eine Chipkarte 90 angeordnet, welche über den Mikroprozessor 100 angesteuert werden kann. Die Chipkarte 90 ist vorzugsweise in einem entsprechend ausgebildeten Aufnahmebereich des Sicherheitsmoduls 20 lösbar eingesetzt. Auf diese Weise ist es möglich, die Chipkarte 90 einfach auszuwechseln. Die Chipkarte 90 kann aber auch unlösbar mit dem Sicherheitsmodul verbunden sein.

Im vorliegenden Beispiel weist das Sicherheitsmodul 20 drei weitere Schnittstellen 41, 42 und 43 auf, an die je nach Anwendungsfall beliebige externe Kommunikationseinrichtungen, wie zum Beispiel ein PDA, ein MDA, ein Mobiltelefon oder externe Speichereinrichtungen oder Datenbankensysteme angeschlossen werden können. Die Schnittstellen können wiederum als drahtlose oder als drahtgebundene Schnittstellen ausgebildet sein. Weiterhin kann eine kontaktlose Kommunikationseinrichtung 30 in dem Sicherheitsmodul 20 implementiert sein, über die die Vorrichtung ohne zusätzliche äußere Antenne mit einer externen kontaktlosen Kommunikationseinheit kommunizieren kann. Der Mikroprozessor 100 kann ferner dazu ausgebildet sein, die an die jeweiligen Schnittstellen angeschlossenen externen Kommunikationseinrichtungen zu erkennen. Angemerkt sei an dieser Stelle, dass an die Schnittstellen 40 bis 43 auch Sensoren angeschlossen werden können, deren Sensordaten im Datenspeicher 50 gesichert abgelegt werden können. Wie nachfolgend noch weiter ausgeführt wird, ist der Mikroprozessor 100 ferner in der Lage, unter Ansprechen auf entsprechende Steuerbefehle gezielt eine der Schnittstellen 40 bis 43 und/oder die Kommunikationseinrichtung 30 auszuwählen, über die jeweils Daten, Anwendungen und/oder Befehle übertragen oder empfangen werden können.

Nachfolgend wird die Funktionsweise des tragbaren Sicherheitsmoduls 20 anhand einiger Ausführungsbeispiele näher erläutert.

Gemäß einem beispielhaften Szenario kann an der Schnittstelle 41 ein Temperatursensor (nicht dargestellt) angeschlossen sein, dessen Daten im Datenspeicher 50 gespeichert werden sollen. Angenommen sei, dass im Speicher 70 bereits eine Anwendung A abgelegt ist, die das Auslesen von Sensordaten aus dem Temperatursensor und Speichern von Sensordaten im Datenspeicher 50 steuert. Die Anwendung A kann vom Rechner 120 zum Sicherheitsmodul 20 übertragen und im Anwendungsspeicher 70 hinterlegt werden. Der Rechner 120, der beispielsweise in einem Trust-Center stehen kann, verschlüsselt die Anwendung A beispielsweise mit einem öffentlichen Schlüssel, der mit dem im Speicher 80 abgelegten Urgeheimnis derart in Verbindung steht, dass der Mikroprozessor 100 die verschlüsselte Anwendung A gegen das Urgeheimnis prüfen kann. Optional kann die Anwendung A im Rechner 120 versiegelt, das heißt beispielsweise mit einer digitalen Signatur versehen werden. Wie später noch erläutert wird, wird die digitale Signatur der Anwendung A zur Authentifizierung der Anwendung mittels der Chipkarte 90 benötigt. Weiterhin sei angenommen, dass die Schnittstelle 40 im vorliegenden Beispiel vom Mikroprozessor 100 ausgewählt worden ist, um Anwendungen beispielsweise über den Rechner 120 herunterladen zu können. Darüber hinaus sei angenommen, dass der Mikroprozessor 100 lediglich die Schnittstelle 41 freigegeben hat, um Sensordaten empfangen zu können.

Um Sensordaten über die Schnittstelle 41 zum Sicherheitsmodul 20 übertragen zu können, wird zunächst, beispielsweise vom Rechner 120, ein versiegelter Befehl zum Aufrufen der beispielhaften Anwendung A. Der über die Schnittstelle 40 vom Rechner 120 empfangene Aufrufbefehl wird unter Steuerung des Mikroprozessors 100 zur Chipkarte 90 weitergeleitet, die eine Authentifizierung des empfangenen Aufrufbefehls vornimmt. Angenommen sei nunmehr, dass die Chipkarte 90 den Aufrufbefehl erfolgreich authentifiziert hat. Die erfolgreiche Authentifizierung des Aufrufbefehls wird dann dem Mikroprozessor 100 mitgeteilt. Unter Ansprechen auf die erfolgreiche Authentifizierung des Aufrufbefehls liest der Mikroprozessor 100 die Anwendung A aus dem Anwendungsspeicher 70 aus und lädt die Anwendung A in den Speicher 110. Der Mikroprozessor 100 verwendet nunmehr das im Speicher 80 gespeicherte Urgeheimnis, um die im Speicher 110 zwischengespeicherte Anwendung A darauf hin zu prüfen, ob sie vom Sicherheitsmodul 20 überhaupt ausgeführt werden darf. Ergibt die Prüfung, dass die im Speicher 110 zwischengespeicherte Anwendung A vom Sicherheitsmodul 20 ausgeführt werden darf, startet der Mikroprozessor 100 den Ablauf der Anwendung A. Die Anwendung A steuert nun einen Prozess, bei dem über die vorbestimmte Schnittstelle 41 zunächst eine Aufforderung zum Temperatursensor (nicht dargestellt) übertragen wird, seine Sensordaten zum Sicherheitsmodul 20 zu übertragen. Steuerdaten, die die Schnittstelle 41 auswählen, um Sensordaten zu empfangen, können beispielsweise in der Anwendung A enthalten sein. Unter Steuerung der Anwendung A werden die an der Schnittstelle 41 empfangenen Sensordaten dann im Speicher 50 abgelegt.

Angemerkt sei an dieser Stelle, dass die im Anwendungsspeicher 70 abgelegten Anwendungen, also auch die Anwendung A, bereits vor ihrem Aufruf vom Mikroprozessor 100 gegen das Urgeheimnis geprüft worden sind. Auf diese Weise kann sichergestellt werden, dass im Anwendungsspeicher 70 nur Anwendungen abgelegt werden, die von dem Sicherheitsmodul 20 auch ausgeführt werden dürfen.

Wichtig ist darauf hinzuweisen, dass bei dem beschriebenen Ausführungsbeispiel die aufgerufene Anwendung A nur dann vom Sicherheitsmodul 20 ausgeführt wird, wenn der entsprechender Aufruf-Befehl und die Anwendung A erfolgreich in der Chipkarte 90 authentifiziert wurden und darüber hinaus die verschlüsselte Anwendung erfolgreich gegenüber dem Urgeheimnis geprüft worden ist. Diese Sicherheitsmechanismen sorgen dafür, dass das Sicherheitsmodul 20 autonom, das heißt unabhängig von der Umgebung prüft, ob eine aufgerufene Anwendung von ihm ausgeführt werden darf oder nicht. Sowohl das Sicherheitsmodul 20 als auch das vom Sicherheitsmodul ausgeführte Verfahren können als sichere Kapselung aufgefasst werden, da das Sicherheitsmodul und die von ihm ausgeführten Operationen gegen die Umgebung abgekapselt sind. Denn nicht nur die auszuführenden Operationen unterliegen strengen Sicherheitsprüfungen; sondern auch die gezielte Auswahl der Schnittstellen, über die ein Kommunikationsaustausch stattfinden kann, bieten eine hohe Kommunikationssicherheit.

Weiterhin kann das Sicherheitsmodul 20 gewährleisten, dass nur versiegelte Daten im Datenspeicher 50 abgelegt werden können. Gemäß einem Ausführungsbeispiel ist denkbar, dass die über die Schnittstelle 41 kommenden Sensordaten bereits in versiegelter Form vom Temperatursensor (nicht dargestellt) übertragen werden. Die im Speicher 110 abgelegte Anwendung A kann in diesem Fall die Weiterleitung der empfangenen versiegelten Sensordaten zur Chipkarte 90 steuern. Die Chipkarte 90 hat die Aufgabe, die versiegelten Snesordaten zu authentifizieren. Bei erfolgreicher Authentifizierung wird die Zugriffslogik 60 freigegeben und die empfangenen versiegelten Sensordaten können in den Datenspeicher 50 abgelegt werden.

Angemerkt sei an dieser Stelle, dass die Authentifizierung der versiegelten Sensordaten in der Chipkarte 90 und das Speichern der Sensordaten im Datenspeicher 50 auch von einer separaten Anwendung gesteuert werden kann. Diese Anwendung kann beispielsweise während des Ablaufs der Anwendung A von dieser aufgerufen werden. Auch die separate Anwendung muss vor der Ausführung erfolgreich gegen das im Speicher 80 abgelegte Urgeheimnis geprüft werden. Der von der Anwendung A erzeugte Befehl zum Aufrufen der separaten Anwendung kann ein versiegelter Befehl sein, der wiederum in der Chipkarte 90 authentifiziert wird, bevor die separate Anwendung aufgerufen und ausgeführt werden kann.

Liegen die empfangenen Sensordaten nicht in versiegelter Form vor, so können die unversiegelten Daten im Sicherheitsmodul 20 versiegelt werden. Hierzu wird beispielsweise wiederum vom Rechner 120 ein versiegelter Befehl zum Aufrufen einer Versiegelungsanwendung zum Sicherheitsmodul 20 übertragen. Angenommen sei, dass die Versiegelungsanwendung in versiegelter und verschlüsselter Form bereits im Anwendungsspeicher 70 hinterlegt ist. Der versiegelte Aufruf-Befehl wird, wie zuvor beschrieben, mittels der Chipkarte 90 authentifiziert. Nach erfolgreicher Authentifizierung oder auch vorher schon lädt der Mikroprozessor 100 die Versiegelungsanwendung in die Chipkarte 90, um die Anwendung zu authentifizieren. Darüber hinaus führt der Mikroprozessor 100 mit der Anwendung eine Prüfung gegen das im Speicher 80 abgelegte Urgeheimnis durch. Für den Fall, dass der Aufruf-Befehl und die Versiegelungsanwendung erfolgreich in der Chipkarte 90 authentifiziert worden sind und die Versiegelungsanwendung erfolgreich gegen das Urgeheimnis geprüft worden ist, lädt der Mikroprozessor 100 die Versiegelungsanwendung in den Speicher 110 und startet deren Ausführung. Unter Steuerung der Versiegelungsanwendung werden die im Datenspeicher 50 abzulegenden Sensordaten versiegelt. Nach der Versiegelung wird die Authentizität der versiegelten Sensorsaten mittels der Chipkarte 90 geprüft. Bei einer erfolgreichen Prüfung der Authentizität werden die nunmehr versiegelten Sensordaten im Datenspeicher 50 abgelegt.

Um die Daten- und Kommunikationssicherheit des Sicherheitsmoduls 20 zu erhöhen, kann das Sicherheitsmodul 20 dafür sorgen, dass die an der Schnittstelle 41 ankommenden Sensordaten in einem vorbestimmten Speicherbereich des Datenspeichers 50 abgelegt werden. Um dies zu erreichen, kann wiederum vom Rechner 120 ein versiegelter Befehl zum Aufrufen einer Anwendung B, welche einen vorbestimmten Speicherbereich der Speichereinrichtung 50 zum Schreiben und/oder Lesen von Daten bereitstellt, übertragen werden. Der Aufrufbefehl kann alternativ auch intern von einer Anwendung, beispielsweise der Anwendung A erzeugt werden. Angenommen sei, dass die Anwendung B bereits im Anwendungsspeicher 70 abgelegt ist und erfolgreich auf Authentizität und gegen das Urgeheimnis geprüft worden ist. Nunmehr wird der Befehl zum Aufrufen der Anwendung B zur Chipkarte 90 weitergeleitet, die daraufhin den versiegelten Aufruf-Befehl authentifiziert. Nach erfolgreicher Authentifizierung liest der Mikroprozessor 100 die Anwendung B in den Speicher 110. Anschließend startet der Mikroprozessor 100 die Anwendung, welche dafür sorgt, dass in dem Datenspeicher 50 ein bestimmter Speicherbereich bereitgestellt wird, in dem die an der Schnittstelle 41 ankommenden Sensordaten gespeichert werden können. Das Bereitstellen des vorbestimmten Speicherbereichs kann dadurch erfolgen, dass ein bestimmter Adressenraum festgelegt wird.

Angenommen sei nunmehr, dass die im Datenspeicher 50 abgelegten Sensordaten beispielsweise an den Rechner 120 ausgegeben werden sollen. Hierzu überträgt der Rechner 120 zunächst einen versiegelten Befehl zum Aufrufen einer Anwendung C zum Lesen der in dem Datenspeicher 50 hinterlegten Daten. Wiederum sei angenommen, dass die Anwendung C bereits im Anwendungsspeicher 70 abgelegt ist, deren Authentizität in der Chipkarte 90 erfolgreich geprüft und die ferner erfolgreich durch den Mikroprozessor 100 gegen das Urgeheimnis 80 geprüft worden ist. Der über die Schnittstelle 40 empfangene versiegelte Aufruf-Befehl wird zur Chipkarte 90 geleitet, die die Authentizität des Befehls prüft. Bei erfolgreicher Authentifizierung des Aufruf-Befehls lädt der Mikroprozessor 100 die Anwendung C in den Speicher 110 und startet die Ausführung der Anwendung C. Unter Steuerung der Anwendung C liest der Mikroprozessor 100 sie Sensordaten aus dem Datenspeicher 50 aus. Optional sorgt die Anwendung C auch dafür, dass die Daten über die Schnittstelle 40 zum Rechner 120 übertragen werden.

Angemerkt sei an dieser Stelle, dass die Anwendung C Informationen enthalten kann, die den Mikroprozessor 100 veranlassen, die Schnittstelle 40 zur Ausgabe von Daten freizugeben.

Das Sicherheitsmodul 20 ist ferner derart ausgebildet, dass es für eine externe Kommunikationseinrichtung, z. B. für den Rechner 120, einen transparenten Zugriff auf die Chipkarte einrichten kann. Aus dem Blickwinkel des Rechners 120 fungiert das Sicherheitsmodul 20 dann wie eine herkömmliche Smart Card. Der transparente Zugriff wird eingerichtet, indem wiederum am Rechner 120 ein versiegelter Befehl zum Aufrufen einer Anwendung D zur Steuerung eines transparenten Zugriffs auf die Chipkarte 90 erzeugt und über die Schnittstelle 40 zum Sicherheitsmodul 20 übertragen wird. Der einfachen Erläuterung wegen sei angenommen, dass auch die Anwendung D bereits vorab über eine freigegebene Schnittstelle des Sicherheitsmoduls 20 in den Anwendungsspeicher 70 geladen und entsprechend der zuvor beschriebenen Prüfverfahren erfolgreich geprüft worden ist. Die Anwendung D ist somit zur Ausführung im Sicherheitsmodul 20 freigegeben. Der versiegelte Befehl zum Aufruf der Anwendung D wird der Chipkarte 90 übergeben, die die Authentizität des versiegelten Befehls prüfen kann. Nach erfolgreicher Authentifizierung des Befehls lädt der Mikroprozessor 100 die Anwendung D in den Speicher 110 und startet die Ausführung. Vorteilhafterweise besteht, solange die Anwendung aktiv ist, ein transparenter Zugriff für den Rechner 120 auf die Chipkarte 90, so dass der Rechner 120 und die Chipkarte 90 in herkömmlicher Weise miteinander kommunizieren können. Transparenter Zugriff bedeutet, dass die Schnittstelle 40 direkt mit der Chipkarte 90 verbunden ist. Eine Kommunikation zwischen der Chipkarte 90 und einer externen Einrichtung kann auch über die drahtlose Kommunikationseinrichtung 30 abgewickelt werden.

An dieser Stelle sei angeführt, dass an die Schnittstellen 40 bis 43 und an die Kommunikationseinrichtung 30 auch eine Anzeigeeinrichtung und eine Eingabevorrichtung (nicht dargestellt) angeschlossen werden können. Über die drahtlose Kommunikationseinrichtung 30 kann das Sicherheitsmodul 20 beispielsweise mit einem Mobilfunktelefon kommunizieren, um die zuvor beschriebenen Funktionalitäten, Operationen und Kommunikationen auszuführen.

In dem Anwendungsspeicher 70 kann auch eine Anwendung abgelegt sein, die in Verbindung mit einem Mobilfunktelefon eine Sprachverschlüsselung und/oder Sprachentschlüsselung durchführt. In diesem Fall kann vom Mobilfunktelefon ein entsprechend versiegelter Aufruf-Befehl über die Kommunikationseinrichtung 30 zum Sicherheitsmodul 20 übertragen werden, welches in der zuvor beschriebenen Weise in der Chipkarte 90 authentifiziert wird. Nach erfolgreicher Authentifizierung wird die zuvor erfolgreich geprüfte Verschlüsselungs- und/oder Entschlüsselungsanwendung in den Speicher 110 geladen und vom Mikroprozessor 100 entsprechend ausgeführt. Auf diese Weise kann der gesamte Sprachverkehr auf der Mobilfunkstrecke verschlüsselt übertragen werden.

Es soll nicht unerwähnt bleiben, dass die beschriebenen Aufruf-Befehle und Anwendungen lediglich beispielhafter Natur sind. Das Sicherheitsmodul 20 kann beliebige Aufruf-Befehle und Anwendungen nach erfolgreicher Prüfung intern ausführen kann. Zudem können in dem Sicherheitsmodul 20 auszuführende Anwendungen von einer laufenden Anwendung aufgerufen werden.

## Patentansprüche

1. Verfahren zum Ausführen von Anwendungen in einer sicheren Vorrichtung (20), welche mit einer externen Kommunikationseinrichtung (120) verbindbar ist, mit folgenden Verfahrensschritten:
- Authentifizieren eines versiegelten Befehls zum Aufrufen einer in der Vorrichtung (20) abgelegten Anwendung durch eine in der Vorrichtung angeordneten Chipkarte (90);
- Prüfen, ob die Anwendung von der Vorrichtung ausgeführt werden darf, wobei die Prüfung innerhalb der Vorrichtung (20, 100)) aber außerhalb der Chipkarte (90) erfolgt; und
- wenn die Anwendung von der Vorrichtung (20) ausgeführt werden darf, Ausführung der Anwendung nach erfolgreicher Authentifizierung durch die Vorrichtung.

2. Verfahren nach Anspruch 1,
**dadurch gekennzeichnet, dass**
in der Vorrichtung (20) ein gegen Auslesen gesichertes Geheimnis abgelegt wird, und dass
der Prüfschritt den Schritt des Prüfens der Anwendung gegen das Geheimnis enthält, um zu ermitteln, ob die Anwendung von der Vorrichtung ausgeführt werden darf.

3. Verfahren nach Anspruch 1 oder 2,
**dadurch gekennzeichnet, dass**
die Anwendung versiegelt wird und dass vor der Ausführung der Anwendung in der Chipkarte (90) eine Authentifizierung der Anwendung durchgeführt wird.

4. Verfahren nach einem der vorstehenden Ansprüche, **dadurch gekennzeichnet, dass**
die Vorrichtung steuerbare Schnittstellen (40, 41, 42, 43) aufweist und dass die Anwendung nur über eine vorbestimmte Schnittstelle (40) mit einer extern verbundenen Kommunikationseinrichtung (120) kommunizieren kann.

5. Verfahren nach Anspruch 4,
**dadurch gekennzeichnet, dass**
die vorbestimmte Schnittstelle (40) in Abhängigkeit von der aufgerufenen Anwendung aus den steuerbaren Schnittstellen ausgewählt wird.

6. Verfahren nach einem der vorstehenden Ansprüche, **dadurch gekennzeichnet, dass**
Anwendungen, Daten und/oder Steuerbefehle nur an vorbestimmten Schnittstellen der Vorrichtung (20) empfangen werden können.

7. Verfahren nach einem der vorstehenden Ansprüche, **dadurch gekennzeichnet, dass**
Daten nur über eine vorbestimmte Schnittstelle der Vorrichtung ausgegeben werden können.

8. Verfahren nach einem der vorstehenden Ansprüche, **dadurch gekennzeichnet, dass**
in der Vorrichtung (20) zu speichernde Daten versiegelt werden,
die versiegelten Daten von der Chipkarte (90) authentifiziert werden, und dass
die versiegelten Daten nach erfolgreicher Authentifizierung in der Vorrichtung gespeichert werden.

9. Verfahren nach Anspruch 8,
**dadurch gekennzeichnet, dass**
die Versiegelung der Daten in der Vorrichtung erfolgt und folgende Schritte umfasst:
Prüfen einer in der Vorrichtung (20) abgelegten Anwendung zum Versiegeln von Daten, ob diese Anwendung von der Vorrichtung ausgeführt werden darf; und
Ausführen der Anwendung zum Versiegeln der zu speichernden Daten nach erfolgreicher Prüfung.

10. Verfahren nach einem der vorstehenden Ansprüche, **gekennzeichnet durch** folgende Schritte:
- Empfangen eines versiegelten Befehls zum Aufrufen einer Anwendung zum Speichern von Daten in der Vorrichtung;
- Prüfen, in der Vorrichtung (20, 100), ob diese Anwendung von der Vorrichtung ausgeführt werden darf;
- Authentifizieren des versiegelten Aufruf-Befehls durch die Chipkarte (90); und,
- wenn die Anwendung von der Vorrichtung (20) ausgeführt werden darf, Ausführung der Anwendung nach erfolgreicher Authentifizierung.

11. Verfahren nach Anspruch 10,
**gekennzeichnet durch** folgende Schritte:
- Empfangen, von einer externen Kommunikationseinrichtung (120), eines versiegelten Befehls zum Aufrufen einer Anwendung zum Lesen der in der Vorrichtung (20) gespeicherten Daten;
- Prüfen, in der Vorrichtung (20, 100), ob diese Anwendung von der Vorrichtung ausgeführt werden darf;
- Authentifizieren des versiegelten Aufruf-Befehls durch die Chipkarte (90); und,
- wenn die Anwendung von der Vorrichtung ausgeführt werden darf, Ausführung der Anwendung nach erfolgreicher Authentifizierung, wobei die Daten während des Ablaufs der Anwendung gelesen und über eine vorbestimmte Schnittstelle ausgegeben werden können.

12. Verfahren nach Anspruch 10 oder 11,
**gekennzeichnet durch** folgende Schritte:
- Empfangen eines versiegelten Befehls zum Aufrufen einer Anwendung, welche einen vorbestimmbaren Speicherbereich einer Speichereinrichtung (50) der Vorrichtung (20) zum Schreiben und/oder Auslesen von Daten bereitstellt;
- Prüfen, in der Vorrichtung (20, 100), ob diese Anwendung von der Vorrichtung ausgeführt werden darf;
- Authentifizieren des versiegelten Aufruf-Befehls durch die Chipkarte (90); und,
- wenn die Anwendung von der Vorrichtung (20) ausgeführt werden darf, Ausführung der Anwendung nach erfolgreicher Authentifizierung.

13. Verfahren nach einem der vorstehenden Ansprüche, **gekennzeichnet durch** folgende Schritte:
- Empfangen, von einer externen Kommunikationseinrichtung (120), eines versiegelten Befehls zum Aufrufen einer Anwendung zur Steuerung eines transparenten Zugriffs auf die Chipkarte (90);
- Prüfen, in der Vorrichtung (20, 100), ob diese Anwendung von der Vorrichtung ausgeführt werden darf;
- Authentifizieren des versiegelten Aufruf-Befehls durch die Chipkarte (90); und,
- wenn die Anwendung von der Vorrichtung ausgeführt werden darf, Ausführung der Anwendung nach erfolgreicher Authentifizierung **durch** die Vorrichtung.

14. Sichere Vorrichtung (20) zum Ausführen von Anwendungen, mit
wenigstens einer ansteuerbaren Schnittstelle (30, 40-43) zum Verbinden mit einer externen Kommunikationseinrichtung (120),
einer ersten Speichereinrichtung (70) zum Speichern wenigstens einer Anwendungen,
einer programmierbaren Steuereinrichtung (100) zum Ausführen einer Anwendung,
eine Chipkarte (90) zum Authentifizieren von versiegelten Befehlen zum Aufrufen von Anwendungen, eine außerhalb der Chipkarte (90) implementierte Prüfeinrichtung (100) zum Prüfen, ob eine Anwendung von der Vorrichtung ausgeführt werden darf;
wobei die programmierbare Steuereinrichtung (100)
derart ausgebildet ist, dass sie eine aufgerufene Anwendung nur ausführt, wenn der Aufrufbefehl durch die Chipkarte (90) erfolgreich authentifiziert worden ist und die Prüfeinrichtung (100) ermittelt hat, dass die Anwendung von der Vorrichtung ausgeführt werden darf.

15. Sichere Vorrichtung nach Anspruch 14,
**gekennzeichnet durch**
eine gegen Auslesen gesicherte Speichereinrichtung (80), in der ein Geheimnis abgelegt ist, wobei die Prüfeinrichtung (100) zum Prüfen der Anwendung gegen das Geheimnis ausgebildet ist, um zu ermitteln, ob die Anwendung von der Vorrichtung ausgeführt werden darf.

16. Sichere Vorrichtung nach Anspruch 14 oder 15,
**dadurch gekennzeichnet, dass**
die Chipkarte (90) zum Authentifizieren von versiegelten Anwendungen und/oder Daten ausgebildet ist und dass
die programmierbare Steuereinrichtung (100) derart ausgebildet ist, dass sie eine aufgerufene Anwendung nur ausführt, wenn der Aufrufbefehl und die Anwendung durch die Chipkarte (90) erfolgreich authentifiziert worden sind.

17. Sichere Vorrichtung nach einem der Ansprüche 14 bis 16,
**dadurch gekennzeichnet, dass**
die Vorrichtung (20) als tragbares Modul ausgebildet ist.

## Claims

1. A method for executing applications in a secure device (20) which is connectable to an external communication device (120), comprising the method steps of:
- authenticating a sealed command for invoking an application stored in the device (20), by a chip card (90) arranged in the device;
- checking whether the application is allowed to be executed by the device, the check being performed inside the device (20, 100) but outside the chip card (90); and
- if the application is allowed to be executed by the device (20), executing of the application by the device once the authentication has been successful.

2. The method according to claim 1,
**characterised in that**
the device (20) stores a secret secured against read-out; and that
the checking step comprises the step of checking the application against the secret to determine whether the application is allowed to be executed by the device.

3. The method according to claim 1 or 2,
**characterised in that**
the application is sealed; and that
prior to the execution of the application authentication of the application is performed in the chip card (90).

4. The method according to any of the preceding claims, **characterised in that**
the device has controllable interfaces (40, 41, 42, 43); and that the application is able to communicate with an externally connected communication device (120) only via a predetermined interface (40).

5. The method according to claim 4, **characterised in that** the predetermined interface (40) is selected from among the controllable interfaces in dependence of the invoked application.

6. The method according to any of the preceding claims, **characterised in that** applications, data, and/or control commands can only be received at predetermined interfaces of the device (20).

7. The method according to any of the preceding claims, **characterised in that** data can only be output via a predetermined interface of the device.

8. The method according to any of the preceding claims, **characterised in that**
data to be stored in the device (20) are sealed;
the sealed data are authenticated by the chip card (90); and that
once the authentication has been successful the sealed data are stored in the device.

9. The method according to claim 8,
**characterised in that**
the sealing of the data is performed in the device and comprises the steps of :
checking, for an application for sealing data which is stored in the device (20), whether said application is allowed to be executed by the device; and
once the checking has been successful, executing the application for sealing the data to be stored.

10. The method according to any of the preceding claims, **characterised by** the steps of :
- receiving a sealed command for invoking an application for storing data in the device;
- checking, within the device (20, 100), whether this application is allowed to be executed by the device;
- authenticating the sealed invoking command by the chip card (90); and
- if the application is allowed to be executed by the device (20), executing of the application once the authentication has been successful.

11. The method according to claim 10,
**characterised by** the steps of:
- receiving, from an external communication device (120), a sealed command for invoking an application for reading the data stored in the device (20);
- checking, in the device (20, 100), whether this application is allowed to be executed by the device;
- authenticating the sealed invoking command by the chip card (90); and
- if the application is allowed to be executed by the device, executing the application once the authentication has been successful, wherein during the execution of the application the data can be read out and output via a predetermined interface.

12. The method according to claim 10 or 11, **characterised by** the steps of:
- receiving a sealed command for invoking an application which provides a predeterminable memory area of a memory means (50) of the device (20) for writing and/or reading data;
- checking, in the device (20, 100), whether this application is allowed to be executed by the device;
- authenticating the sealed invoking command, by the chip card (90); and
- if the application is allowed to be executed by the device (20), executing the application once the authentication has been successful.

13. The method according to any of the preceding claims, **characterised by** the steps of:
- receiving, from an external communication device (120), a sealed command for invoking an application for controlling transparent access to the chip card (90);
- checking, in the device (20, 100), whether this application is allowed to be executed by the device;
- authenticating the sealed invoking command, by the chip card (90); and
- if the application is allowed to be executed by the device, executing the application once the authentication by the device has been successful.

14. A secure device (20) for executing applications, comprising :
- at least one controllable interface (30, 40 - 43) for connection to an external communication device (120);
- a first storing means (70) for storing at least one application;
- a programmable control means (100) for executing an application;
- a chip card (90) for authenticating sealed commands for invoking applications;
- a checking means (100) implemented outside of the chip card (90) for checking whether an application is allowed to be executed by the device;
wherein the programmable control means (100) is adapted to execute an invoked application only if the invoking command has been successfully authenticated by the chip card (90) and the checking means (100) has determined that the application is allowed to be executed by the device.

15. The secure device according to claim 14, **characterised by**
a memory means (80) secured against read-out and storing a secret, wherein the checking means (100) is adapted for checking the application against the secret in order to determine whether the application is allowed to be executed by the device.

16. The secure device according to claim 14 or 15, **characterised in that**
the chip card (90) is adapted for authenticating sealed applications and/or data; and that
the programmable control means (100) is adapted to execute an invoked application only if the invoking command and the application have been successfully authenticated by the chip card (90).

17. The secure device according to any of claims 14 to 16, **characterised in that**
the device (20) is implemented as a portable module.

## Revendications

1. Procédé destiné à exécuter des applications dans un dispositif sécurisé (20), lequel peut être raccordé à un système de communication externe (120), comprenant les étapes de procédé suivantes consistant à ;
- authentifier une instruction scellée permettant d'appeler une application mise en mémoire dans le dispositif (20) au moyen d'une carte à puce (90) agencée dans le dispositif ;
- vérifier si l'application peut être exécutée par le dispositif, la vérification étant effectuée à l'intérieur du dispositif (20, 100) mais à l'extérieur de la carte à puce (90) ; et
- si l'application peut être exécutée par le dispositif (20), exécuter l'application au moyen du dispositif une fois l'authentification menée à bien.

2. Procédé selon la revendication 1, **caractérisé en ce que** :
un secret dont la lecture est sécurisée est mis en mémoire dans le dispositif (20), et
**en ce que** l'étape de vérification contient l'étape destinée à vérifier si l'application porte atteinte au secret, afin de déterminer si l'application peut être exécutée par le dispositif.

3. Procédé selon la revendication 1 ou 2, **caractérisé en ce que** :
l'application est scellée et une authentification de l'application est effectuée avant l'exécution de l'application dans la carte à puce (90).

4. Procédé selon l'une quelconque des revendications précédentes, **caractérisé en ce que** :
le dispositif comprend des interfaces (40, 41, 42, 43) pouvant être commandées et l'application ne peut communiquer avec un système de communication (120) relié de manière externe que par l'intermédiaire d'une interface (40) prédéfinie.

5. Procédé selon la revendication 4, **caractérisé en ce que** :
l'interface (40) prédéfinie est sélectionnée à partir des interfaces pouvant être commandées en fonction de l'application appelée.

6. Procédé selon l'une quelconque des revendications précédentes, **caractérisé en ce que** :
des applications, des données et/ou des instructions de commande ne peuvent être reçues qu'au niveau d'interfaces prédéfinies du dispositif (20).

7. Procédé selon l'une quelconque des revendications précédentes, **caractérisé en ce que** :
des données ne peuvent être délivrées que par l'intermédiaire d'une interface prédéfinie du dispositif.

8. Procédé selon l'une quelconque des revendications précédentes, **caractérisé en ce que** :
des données à mettre en mémoire dans le dispositif (20) sont scellées,
les données scellées sont authentifiées par la carte à puce (90), et
les données scellées sont mises en mémoire dans le dispositif une fois l'authentification menée à bien.

9. Procédé selon la revendication 8, **caractérisé en ce que** :
le scellement des données dans le dispositif est effectué et comprend les étapes suivantes consistant à :
vérifier si une application mise en mémoire dans le dispositif (20) et permettant de sceller les données peut être exécutée par le dispositif ; et
exécuter l'application permettant de sceller les données à mettre en mémoire une fois la vérification menée à bien.

10. Procédé selon l'une quelconque des revendications précédentes, **caractérisé par** les étapes suivantes consistant à :
- recevoir une instruction scellée permettant d'appeler une application destinée à mettre en mémoire des données dans le dispositif ;
- vérifier, dans le dispositif (20, 100), si cette application peut être exécutée par le dispositif ;
- authentifier l'instruction d'appel scellée au moyen de la carte à puce (90) ; et
- si l'application peut être exécutée par le dispositif (20), exécuter l'application une fois l'authentification menée à bien.

11. Procédé selon la revendication 10, **caractérisé par** les étapes suivantes consistant à :
- recevoir, d'un système de communication externe (120), une instruction scellée permettant d'appeler une application destinée à lire les données mises en mémoire dans le dispositif (20) ;
- vérifier, dans le dispositif (20, 100), si cette application peut être exécutée par le dispositif ;
- authentifier l'instruction d'appel scellée au moyen de la carte à puce (90) ; et
- si l'application peut être exécutée par le dispositif, exécuter l'application une fois l'authentification menée à bien, les données pouvant être lues pendant le déroulement de l'application et délivrées par l'intermédiaire d'une interface prédéfinie.

12. Procédé selon la revendication 10 ou 11, **caractérisé par** les étapes suivantes consistant à :
- recevoir une instruction scellée permettant d'appeler une application, laquelle fournit une zone de mémoire pouvant être prédéfinie d'un système mémoire (50) du dispositif (20) pour l'écriture et/ou la lecture de données ;
- vérifier, dans le dispositif (20, 100), si cette application peut être exécutée par le dispositif ;
- authentifier l'instruction d'appel scellée au moyen de la carte à puce (90) ; et
- si l'application peut être exécutée par le dispositif (20), exécuter l'application une fois l'authentification menée à bien.

13. Procédé selon l'une quelconque des revendications précédentes, **caractérisé par** les étapes suivantes consistant à :
- recevoir, d'un système de communication externe (120), une instruction scellée permettant d'appeler une application pour la commande d'un accès transparent à la carte à puce (90) ;
- vérifier, dans le dispositif (20, 100), si cette application peut être exécutée par le dispositif ;
- authentifier l'instruction d'appel scellée au moyen de la carte à puce (90) ; et
- si l'application peut être exécutée par le dispositif, exécuter l'application au moyen du dispositif une fois l'authentification menée à bien.

14. Dispositif sécurisé (20) permettant d'exécuter des applications, comprenant :
au moins une interface (30, 40, 43) pouvant être commandée destinée à être reliée à un système de communication externe (120) d'un premier système mémoire (70) pour la mise en mémoire d'au moins une application,
un système de commande (100) programmable permettant d'exécuter une application,
une carte à puce (90) permettant d'authentifier des instructions scellées destinées à appeler des applications,
un système de vérification (100) implémenté à l'extérieur de la carte à puce (90) et destiné à vérifier si une application peut être exécutée par le dispositif,
dans lequel le système de commande (100) programmable est conçu de telle manière qu'il n'exécute une application appelée que lorsque l'instruction d'appel a été authentifiée avec succès par la carte à puce (90) et que le système de vérification (100) a déterminé que l'application peut être exécutée par le dispositif.

15. Dispositif sécurisé selon la revendication 14, **caractérisé par** :
un système de mémoire (80) dont la lecture est sécurisée et dans lequel un secret est mis en mémoire, dans lequel le système de vérification (100) est conçu pour vérifier que l'application ne porte pas atteinte au secret, afin de déterminer si l'application peut être exécutée par le dispositif.

16. Dispositif sécurisé selon la revendication 14 ou 15, **caractérisé en ce que** :
la carte à puce (90) est conçue pour authentifier des applications et/ou des données scellées, et
le système de commande (100) programmable est conçu de telle manière qu'il ne peut exécuter une application appelée que lorsque l'instruction d'appel et l'application ont été authentifiées avec succès par la carte à puce (90).

17. Dispositif sécurisé selon l'une quelconque des revendications 14 à 16, le dispositif (20) étant **caractérisé en ce qu'**il est conçu comme un module portatif.
